# EUROPEAN PATENT APPLICATION

(11) **EP 3 798 912 A1**
(43) Date of publication of application: **31.03.2021**
(21) Application number: 19199301.3
(22) Date of filing: 24.09.2019
(51) Int. Cl.: G06N 3/04, B62D 1/00, B62D 6/00, G06N 3/08, G08G 1/16

(54) **TRAINING METHOD FOR A CONVOLUTIONAL NEURAL NETWORK FOR PREDICTING A DRIVING MANEUVER OF A TRAFFIC PARTICIPANT**

(71) Applicant: Continental Automotive GmbH, 30165 Hannover (DE)
(72) Inventor: Hota, Rudra Narayan, 90411 Nürnberg (DE); Lux, Markus, 90411 Nürnberg (DE); Edling, Frank, 90411 Nürnberg (DE); Jürgens, Gunnar, 90411 Nürnberg (DE); Dreiseitel, Pia, 90411 Nürnberg (DE)
(74) Representative: Continental Corporation

(57) **Abstract**

The invention relates to a training method for a convolutional neural network for predicting a driving maneuver of at least one traffic participant (V0, V1) in a traffic scenario (S) of an ego-vehicle (E), comprising the steps:
determining (S1) traffic data for the convolutional neural network (10), wherein the traffic data comprises a position of each of the traffic participants (V0, V1), a lane assignment for each of the traffic participants (V0, V1) and at least one additional traffic parameter, wherein the at least one additional traffic parameter relates to the traffic scenario (S); wherein
determining (S2) transformed traffic data by transforming positional coordinates of the traffic data into Frenet space;
determining (S3) a trained convolutional neural network (10) by training the convolutional neural network dependent on the determined transformed traffic data.

## Description

The invention relates to a training method for a convolutional neural network for predicting a driving maneuver of at least one traffic participant in a traffic scenario of an ego-vehicle, a prediction method for a driving maneuver of at least one traffic participant in a traffic scenario of an ego-vehicle, a trained convolutional neural network, a trained outlier detection model, a control unit and a control method of an at least partly autonomous vehicle.

Today, advanced driver assistance systems, ADAS, are available on the market. Adaptive cruise control, ACC, functionality provides automatic longitudinal control of a vehicle by keeping a desired speed and distance other vehicles in front. Lateral control, however, is only available as a semi-automatic feature, i.e. it requires manual confirmation of the driver, for example to initiate a lane change. Both for longitudinal and lateral control, other traffic participants' motions are predicted using their vehicle dynamics only.

The common approach to maneuver and trajectory prediction implies independent prediction of each traffic participant from their sensory inputs. However, in reality, future driving behaviour does not only depend on its own measurements rather how all other traffic participant are acting at a given moment. Prior work on on-road vehicle maneuver prediction with consideration of surrounding vehicles are limited to rule-based approach.

Furthermore, there exists no general model of driving behaviour that allows for an early detection of traffic anomalies.

The problem of todays' market solutions is their poor prediction performance of other traffic participants. It does not suffice to ensure comfortable, automated driving on the motorway. A cut-in of a vehicle to the ego lane might be detected too late, such that harsh braking is necessary. A cut-in of a vehicle to the ego lane might be predicted wrongly, such that the ego vehicle brakes, even though no other vehicle will cut-in. A cut-out from a vehicle in front of the ego vehicle is detected too late. For example, the vehicle in front changes to the exit ramp on the motorway, such that the ego vehicle decelerates unnecessarily, because it keeps the cutting-out vehicle as control target for too long. Prediction of the above such events are done independently i.e. without considering the surrounding vehicles. Due to the above drawbacks, in an automated driving context, cooperative driving, as it requires accurate behavioural prediction, is not possible. The inability to detect traffic anomalies in an early stage poses a safety risk due to a delay of possible counter actions.

There is a need for an improved training method for a convolutional neural network for predicting a driving maneuver of a traffic participant. This objective is achieved by the subject-matter of the independent patent claims.

Further preferred embodiments are evident from the dependent patent claims.

According to an aspect, a training method for a convolutional neural network for predicting a driving maneuver of at least one traffic participant in a traffic scenario of an ego-vehicle comprises the steps determining traffic data for the convolutional neural network, wherein the traffic data comprises a position of each of the traffic participants, a lane assignment for each of the traffic participants and at least one additional traffic parameter, wherein the at least one additional traffic parameter relates to the traffic scenario, wherein determining transformed traffic data by transforming positional coordinates of the traffic data into Frenet space and determining a trained convolutional neural network by training the convolutional neural network with the determined transformed traffic data.

The term "ego-vehicle", as described herein, describes a vehicle from which the traffic scenario around the vehicle is monitored and analysed.

The term "social interaction" , as used herein, comprises the interaction of all relevant objects, for example other traffic participants in the traffic scenario.

The term "traffic scenario", as used herein, describes a traffic situation, in other words the near traffic participants, around the ego-vehicle. This also includes interaction patterns of the traffic participants of the scenario. In other words, the traffic scenario describes all necessary information of a traffic situation that is needed to understand the interaction between the ego-vehicle and the traffic participants as well as the traffic participants among each other.

Thus, a training method can be provided for improved real-world scenario training.

Different traffic scenarios, in particular different road situations, cover different driving styles and different social interactions. To be able to adapt quickly to changes in the environment, a new set of features, which herein is called additional traffic parameters, is necessary. Hence, to ensure a reliable prediction in a real-world scenario, the convolutional neural network is configured for accepting the additional traffic parameters for every traffic participant.

Preferably, the traffic data indicates social interactions between the traffic participants, and further preferably between the traffic participants and the ego-vehicle. Further preferably, the traffic data reflect real-world driving traffic scenarios.

Thus, the transformed traffic data relate to a representation where the road is straight.

The trained convolutional neural network, instead on only relying on vehicle dynamics only, takes into account arbitrary social interactions on the road. Rule-based approaches can only cover pre-defined scenarios with small complexity, for example, "vehicle 1 brakes, so the following vehicle 2 will likely change the lane". Learning the social interaction solves a multitude of scenarios, for example "vehicle 1 brakes a little, following vehicle 2 on the same lane is likely to brake more, following vehicle 3 on the same lane is likely to do a lane change, because vehicle 4 and 5 on the adjacent lane will leave a sufficient gap to change in the next 5 seconds" . Such interactions are of high importance for a correct intention prediction. This particular approach enables correct prediction of scenarios with much higher complexity. Furthermore, an earlier prediction of maneuvers of the traffic participant is provided.

Therefore, the possibility to react earlier in a given situation is provided. Therefore, an increased comfort by early prediction of cut-ins and cut-outs is provided. Thus, an increased comfort for other traffic participants is provided due to the enablement of cooperative driving.

Thus, an improved safety of the ego-vehicle is provided due to an early identification of anomalies, which indicate potentially hazardous road situations.

Additionally, a relatively large pool of traffic data can be used, hence experience from real-world data is used.

Preferably, the method is a self-supervision method.

Thus, an improved training method is provided.

In a preferred embodiment, the method comprises the steps applying the trained convolutional neural network on a plurality of traffic scenarios thereby determining a distribution of social interactions and determining a trained outlier detection model by training an outlier detection model dependent on the determined distribution.

The term "anomaly", as used herein, relates to a non-normal situation that, in a human driver, would usually trigger a state of alertness, for example that that driver is not sure what is happening in front of me, and preferably let the driver exert a more cautious control over the vehicle, for example to stay on the lane and increase the distance to the vehicle in front.

Thus, anomalies in behaviour of traffic participants can be detected.

In a preferred embodiment, determining the distribution comprises using a read-out function of a hidden layer of the convolution neural network.

Preferably, to detect anomalies, a hidden layer within a convolutional social pooling part of the convolutional neural network is evaluated using a read-out layer, preferably during inference of the convolutional neural network. Such a read-out layer is a latent representation of a given social interaction. Using a large data set of all possible traffic scenarios and social interactions, all the respective hidden layer representations are collected. Hence, dependent on the hidden layer representations the distribution of social interactions is determined.

Thus, an improved training method is provided.

In a preferred embodiment, the at least one additional traffic parameter comprises traffic participant data, road data and/or environmental data.

Preferably, the traffic participant data comprises data relating to the ego-vehicle and/or the traffic participants in the traffic scenario. Further preferably, the traffic participant data comprises a yaw angle, kinematics, in particular velocity and/or acceleration, a distance to lane markings, a break indicator and/or a turn indicator.

Preferably, the road data comprises data relating to the road in the traffic scenario. Further preferably the road data comprises a curvature, a slope, in particular a longitudinal slope and/or a lateral slope, a width, a lane width, a number of lanes, a lane type, in particular a standard lane, a break-down lane, an entry ramp or an exit ramp, a road type, in particular a motorway, a country road, a city road or a residential area, and/or if a construction site is present.

Preferably, the environmental data comprises data relating to environmental conditions in the traffic scenario. Further preferably, the environmental data comprises a temperature, a friction coefficient, a visibility and/or a precipitation.

Thus, an input data, in this case the traffic data, for the convolutional neural network is not a grid that contains only the positions, in particular in form of a x-coordinate and a y-coordinate, of the traffic participants and lane assignments, but adds one or more layers to the traffic data to accept the above mentioned additional traffic data.

Thus, an improved training method is provided.

In a preferred embodiment, the traffic data is obtained from environment sensors of the moving ego-vehicle.

Instead of training the convolutional neural network on traffic data obtained from road cameras, in particular from an external static observer, the convolutional neural network is trained on traffic data that is measured from of the moving ego-vehicle, in particular by environment sensors. Preferably, the sensors are radar sensors, camera sensors and/or lidar sensors. However, the traffic data obtained by the environment sensors of the moving ego-vehicle are heavily influenced by the ego-vehicle's motion, in particular a yaw rate change of the vehicle, an influence of curvature of the ego-vehicle. By using Frenet transformations on the traffic data keeps the convolutional neural network independent of such influences.

Preferably, the driving maneuver is predicted dependent on a velocity of the ego-vehicle.

Preferably, the convolutional neural network is trained offline. The convolutional neural network is preferably trained with traffic data comprising vehicle test data from durability test runs during development or from former projects with similar sensor setup.

Preferably, the influence of the ego-vehicle' s yaw angle is filtered out. The traffic data "road curvature" is still used as one input to the convolutional neural network in order to train the dependency on interaction of traffic objects, in particular traffic participants, on curvature. In the presence of a HD environmental model, that for example provides accurate lateral offsets even with curvature in 100m distance, a Frenet transformation of the traffic data may not be necessary.

Thus, an improved training method is provided.

In a preferred embodiment, transforming positional coordinates into Frenet space comprises applying a road geometry model and/or a clothoid model onto the positional coordinates.

Thus, the network is not influenced by road curvature or the motion of the ego-vehicle.

According to an aspect, a trained convolutional neural network is configured for executing the prediction method for a driving maneuver of at least one traffic participant in a traffic scenario of an ego-vehicle, as described herein.

The trained convolutional neural network is preferably configured for accepting the additional traffic data as input.

According to an aspect, a trained outlier detection model is configured for executing the prediction method for an anomaly in a traffic scenario, as described herein.

In a preferred embodiment, the trained outlier detection model comprises a one-class nu-Support Vector Machine.

Preferably, the outlier detection model is fitted to the distribution. Using a one-class nu-Support Vector Machine, the parameter nu can be used to control a training error, i.e. the number of allowed outliers. Once such an outlier detection model is fitted, it can be evaluated on previously unseen traffic data, in particular any traffic scenario experienced in live driving. In such traffic scenarios, the hidden layer is read out and compared with the outlier detection model that was built on the distribution. The outlier detection model is then able to differentiate between social interactions that fit within the learned distribution and those, which are outliers.

According to an aspect a prediction method for a driving maneuver of at least one traffic participant in a traffic scenario of an ego-vehicle, comprising the steps determining unseen traffic data and predicting a maneuver class and a trajectory for each traffic participant in the traffic scenario dependent on the trained convolutional neural network, as described herein, and the determined unseen traffic data, wherein the predicted trajectory relates to a predicted driving maneuver and wherein the predicted maneuver class relates to a type of driving maneuver.

Preferably, the unseen traffic data has the same structure as the traffic data.

The term "trajectory", as described herein, comprises a movement vector indicating a predicted movement of a traffic participant and/or the ego-vehicle and thus the predicted driving maneuver of the traffic participant. Preferably, for each traffic participant a separate movement vector is determined.

The term "maneuver class", as described herein, indicates a type of driving maneuver of a traffic participant in a traffic scenario. Preferably, the maneuver class comprises lane switching and overtaking.

In a preferred embodiment, the method comprises the steps determining unseen traffic data relating to the traffic scenario and predicting an anomaly in the unseen traffic data using the trained outlier detection model, as described herein.

In a preferred embodiment, predicting the anomaly comprises using the trained convolutional neural network for all traffic scenarios in the traffic data.

In a preferred embodiment, the method comprises the steps determining transformed unseen traffic data by transforming unseen positional coordinates of the unseen traffic data into unseen Frenet coordinates using road geometry features and predicting an anomaly in the unseen traffic data using the trained outlier detection model, as described herein, and the determined transformed unseen traffic data.

In a preferred embodiment, predicting the anomaly comprises determining anomaly output data by feeding the determined transformed unseen traffic data into the trained convolution neural network and classifying the determined anomaly output data dependent on the trained outlier detection model, as described herein.

Thus, an input for the convolutional neural network comprises not only a grid that contains the position, in particular x-y-position, and the lane assignment of each traffic participant, but also comprises one or more layers to accept the at least one additional traffic parameter.

According to an aspect, a control unit is configured for executing a training method, as described herein, and/or a prediction method, as described herein.

According to an aspect, a control method of an at least partly autonomous vehicle comprises the steps determining a trained convolutional neural network, as described herein, and/or determining a trained outlier detection model, as described herein, and controlling the at least partly autonomous vehicle dependent on the determined trained convolutional neural network and/or dependent on the trained outlier detection model.

Preferably, the at least partly autonomous vehicle is the ego-vehicle.

In case an anomaly in a traffic scenario is determined by the convolutional neural network, the at least partly autonomous vehicle can take actions to increase safety. Such actions preferably include a prefill of an electronic brake system, EBS, a deceleration, for example a smooth deceleration by setting requested engine torque to 0 without braking, preventing lane change, in particular planned for comfort reasons and/or keeping speed, Increasing a distance to a front vehicle and/or preparing passengers for potential emergency reaction, in particular by comfortably pre-tensioning a seat-belt of the ego-vehicle.

Preferably, controlling the at least partly autonomous vehicle comprises controlling an electric power steering of the vehicle, an electronic brake system of the vehicle, an engine management system of the vehicle and/or a transmission control unit of the vehicle.

### Brief description of the drawings

The subject matter of the invention will be explained in more detail in the following text with reference to preferred exemplary embodiments, which are illustrated in the attached drawings, in which:
Fig.1 schematically shows a traffic scenario with an ego-vehicle and six traffic participants;
Fig.2 schematically shows a traffic scenario with predicted trajectories for each traffic participant;
Fig.3 schematically shows a traffic scenario with a control trajectory for the ego-vehicle;
Fig.4 schematically shows the probabilistic determination of the control trajectory for the ego-vehicle;
Fig.5 schematically shows a structure of a network for anomaly detection;
Fig.6 schematically shows a device for controlling an at least partly autonomous vehicle; and
Fig.7 schematically shows a training method, as described herein.

The reference symbols used in the drawings, and their meanings, are listed in summary form in the list of reference symbols. In principle, identical parts are provided with the same reference symbols in the figures.

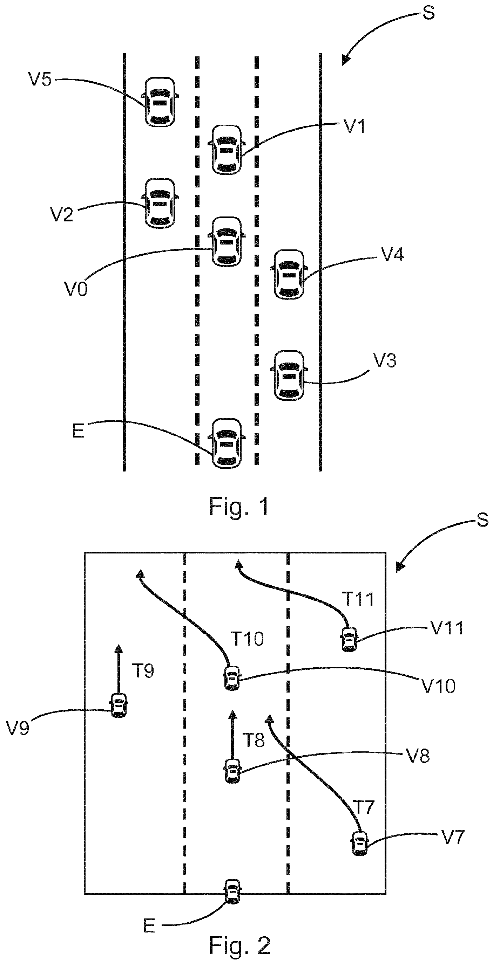

Fig.1 schematically shows a traffic scenario S with an ego-vehicle E and a first through six vehicle V0, V1, V2, V3, V4, V5. The vehicles V0, V1, V2, V3, V3, V5 in this case are the only traffic participants in the traffic scenario S. The vehicles V0, V1, V2, V3, V3, V5, V5 are regarded as agents acting depending on actions of other vehicles V0, V1, V2, V3, V3, V5, V5. By training a convolutional neural network with a huge amount of traffic data captured on motorways, the convolutional neural network is able to predict the interaction of all vehicles V0, V1, V2, V3, V3, V5, V5. In this example, a fourth vehicle V3 will change the lane, because a sixth vehicle V5 is too slow. This can be determined based on the traffic data used as training data for the convolutional neural network.

For every vehicle, longitudinal and lateral position, and lane assignment, as perceived by the ego vehicle E, is determined as traffic data. For more complex traffic scenarios and for a reliable prediction in a real-world scenario, more features in form of additional traffic data are included.

Fig.2 schematically shows a result of executing the prediction method for a driving maneuver of five traffic participants, a seventh vehicle V6, an eighth vehicle V7, a ninth vehicle V8, a tenth vehicle V9, an eleventh vehicle V10 and a twelves vehicle V11, in a traffic scenario S of an ego-vehicle E on a road with a left lane, a middle lane and a right lane.

The prediction method for a driving maneuver determines a sixth trajectory T7 indicating a future driving maneuver of the sixth vehicle V7, a seventh trajectory T8 indicating a future driving maneuver of the seventh vehicle V8, an eighth trajectory T9 indicating a future driving maneuver of the eighth vehicle V9, a ninth trajectory T10 indicating a future driving maneuver of the ninth vehicle V10 and a tenth trajectory T11 indicating a future maneuver of the tenth vehicle T11.

The sixth trajectory T7 indicates that the sixth vehicle V7 will change the lane from the right lane to the middle lane thereby trying to merge between the ego-vehicle E and the ninth vehicle V10. The seventh trajectory T8 indicates that the seventh vehicle V8 will stay on its middle lane. The eighth trajectory T9 indicates that the eighth vehicle V9 will stay on its left lane. The ninth trajectory T10 indicates that the ninth vehicle V10 will overturn the eighth vehicle V9 and change from the middle lane to the right lane. The tenth trajectory T11 indicates that the tenth vehicle T11 will change the lane from the right lane to the middle lane in front of the seventh vehicle T8.

Thus, the ego-vehicle E, which preferably is an at least partly autonomous vehicle, is controlled to slow down, since it is expected from the traffic scenario that the sixth vehicle V7 will merge between the seventh vehicle V8 and the ego-vehicle E in the middle lane.

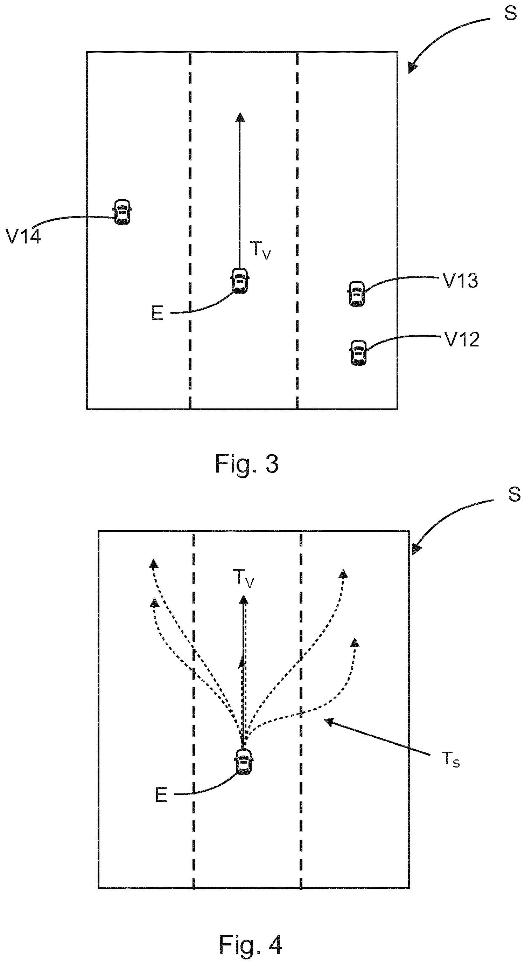

Fig.3 schematically shows a traffic scenario S with a control trajectory T_{V} for the ego-vehicle E. Around the ego-vehicle E, which is driving in the middle lane, an eleventh vehicle V12 and a twelfth vehicle V13 are driving on the right lane and a thirteenth vehicle V14 is driving on the left lane. Dependent on predicted driving maneuvers of the surrounding vehicles V12, V13, V14, a control trajectory T_{V} is determined, based on which the ego-vehicle E is to be controlled. In particular based on the velocities of the traffic participants V12, V13, V14 and the ego-vehicle E together with the predicted driving maneuvers of the traffic participants V12, V13, V14, it is determined that the ego-vehicle E should stay on the middle lane, which is indicated by the control trajectory T_{V}.

Fig.4 schematically shows a probabilistic determination of the control trajectory T_{V} for the ego-vehicle E. The control trajectory T_{V} is not determined directly. Rather a swarm trajectory T_{S} is determined, comprising a plurality of possible control trajectories indicating staying on the middle lane or switching lanes with continued speed or accelerating (longer trajectories) or with slowed down speed (shorter trajectories). Dependent on the swarm trajectory T_{S}, a probabilistic determination is executed. In this case, the trajectory indicating staying in the middle lane with continued speed or accelerating is determined to be the control trajectory T_{V}.

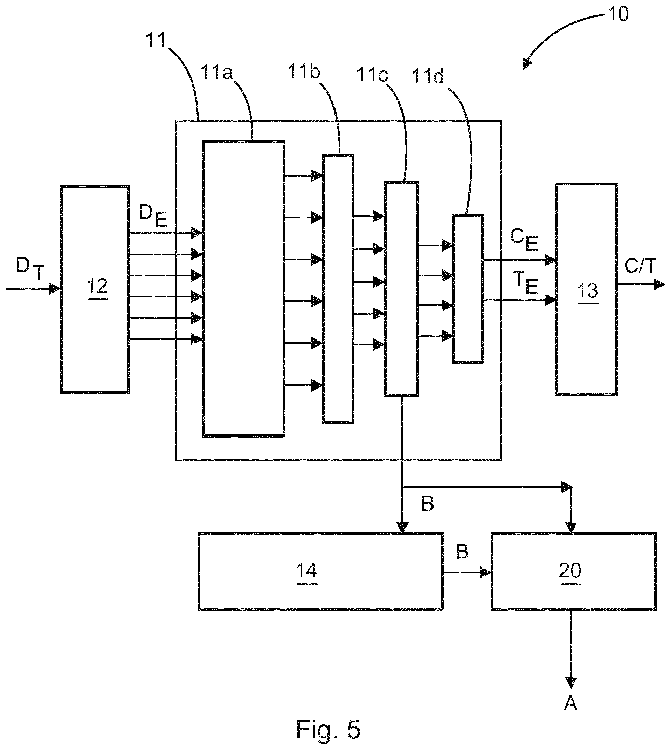

Fig.5 schematically shows a structure of a trained convolutional neural network 10 including a trained outlier detection model 20.

The trained convolutional neural network 10 comprises an encoder 12, a convolutional social pooling unit 11, a decoder 13, the trained outlier detection model 20 and an outlier training database 14.

Transformed traffic data D_{T}, which is traffic data of a traffic scenario, wherein the position coordinates of the traffic data are transformed into Frenet space, is input into the encoder 12. The encoder 12 in this case is a long short-term memory encoding the transformed traffic data D_{T} to encoded traffic data D_{E}. The transformed traffic data D_{T} is then provided to the convolutional social pooling unit 11. The convolutional social pooling unit 11 comprises a social tensor layer 11a, as well as a plurality of hidden layers, in this case a first hidden layer 11b, a second hidden layer 11c and a third hidden layer 11d. Based on the provided transformed traffic data DT, the convolutional social pooling unit 11 determines a prediction of driving maneuvers of the traffic participants of the traffic scenario, in particular encoded maneuver class data C_{E} and encoded trajectory data T_{E}. The prediction has to be decoded again by the decoder 13. The decoder 13 in this case is a long short-term memory. The decoder 13 thus determines a maneuver class C and a trajectory T from the encoded maneuver class data C_{E} and encoded trajectory data T_{E} indicating the prediction of driving maneuvers of the traffic participants.

As indicated in fig. 5, the trained convolutional neural network 10 comprises the outlier detection model 20 for detecting an anomaly in behaviour of traffic participants. During inference, the second hidden layer 11c is evaluated, in other words read-out. The second hidden layer 11c is a latent representation of a given social behaviour, for example overtaking. From the second hidden layer 11c, an outlier training database 14 is fed with social behaviour data B indicating the latent representation of the given social behaviour. For each social behaviour, a specific hidden layer needs to be read out. In the outlier training database 14 a plurality of social behaviour data B from different traffic scenarios is stored. The plurality of social behaviour data B of a plurality of hidden layers can be used to determine a distribution of social behaviour. Based on the social behaviour data B an outlier detection model can be trained, determining the trained outlier detection model 20.

Thus, the trained outlier detection model 20 can be provided with social behaviour data B of a specific unseen traffic scenario and determine a probability of an anomaly A.

Thus, the trained convolutional neural network 10 is able to predict a driving maneuver for each traffic participant of the traffic scenario and predict the probability of an anomaly A of any of the traffic participants.

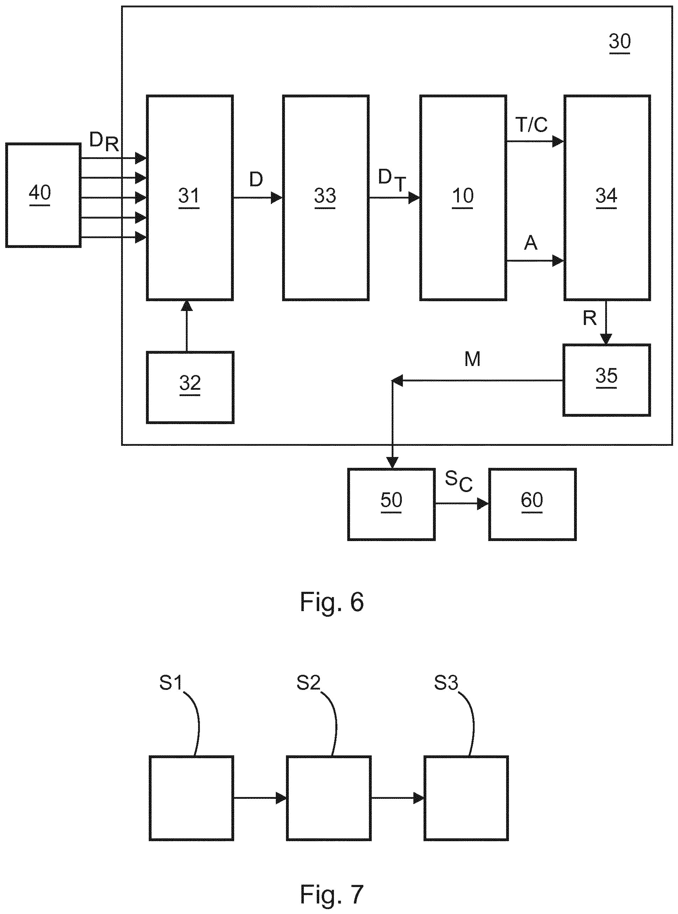

Fig.6 schematically shows a device 30 for controlling an at least partly autonomous vehicle. The device 30 comprises environment model 31, an ego-vehicle dynamics unit 32, a signal pre-processing model 33, a trained convolutional neural network 10 for convolutional social pooling, a scenario assessment unit 34 and a motion planer 35.

An environment sensor 40 at an ego-vehicle E determines raw unseen traffic data D_{R} from a given traffic scenario. The environment sensor 40 comprises a radar sensor, a camera sensor and a lidar sensor. The raw unseen traffic data D_{R} is provided to the environment model 31. The environment model 31 is configured for fusion of radar data from the radar sensor, camera data from the camera sensor and lidar data from the lidar sensor. In addition based on the environment model 31 objects in the raw unseen traffic data D_{R} are detected and tracked. Furthermore, based on the environment model 31 lanes of the road are detected and tracked. In order to execute the function of the environment model 31 properly based on the provided raw unseen traffic data D_{R} the environment model 31 is provided with ego-vehicle data D_{E} provided by the ego-vehicle dynamics unit 32. The ego-vehicle data D_{E} comprise a speed, a yaw rate, a lateral acceleration, a yaw angle, a longitudinal slope and a lateral slope of the ego-vehicle E. The environment model 31 thus determines unseen traffic data D from the raw unseen traffic data D_{R} and the ego-vehicle data D_{E}. The unseen traffic data D comprises traffic participant data, road data and/or environmental data. The traffic participant data comprises a position, lane assignment, a yaw angle, kinematics, a distance to lane markings, a brake indicator and/or a turn indicator. The road data comprises a curvature, a lateral slope, a longitudinal slope, a width, a lane width, a number of lanes, a lane type a road type and/or if a construction is present or not. The environmental data comprises a temperature, a friction coefficient, a visibility of the traffic scenario and/or a precipitation.

The determined unseen traffic data D is provided to the signal pre-processing model 33. The signal pre-processing model 33 transforms position coordinates of the unseen traffic data D into the Frenet space. Thus, the unseen traffic data D is transformed into a representation where the road is straight. Additionally, the influence of the yaw angle of the ego-vehicle E is filtered out. Thus, transformed unseen traffic data D_{T} is determined by the signal pre-processing model 33.

The transformed unseen traffic data DT is provided to the trained convolutional neural network 10. Dependent on the trained convolutional neural network 10, for each traffic participant a prediction is made for a future driving maneuver, in particular a driving maneuver class C and a trajectory T. In other words, the prediction determines a predicted position of each traffic participant over time for a predetermined amount of time. Additionally, an anomaly A, in particular a probability of an anomaly A, of the traffic scenario, in particular a social situation of the traffic scenario, is determined by a trained outlier detection model 20. In this case, the trained outlier detection model 20 is part of the trained convolutional neural network 10. The predictions of the driving maneuvers in form of trajectories T and the probability of the anomaly A is provided to the scenario assessment unit 34.

The scenario assessment unit 34 analyses the provided data and determines result data R, indicating the boundaries for a proposed resulting motion of the ego-vehicle E, which should lead to a smooth driving of the ego-vehicle through the given traffic scenario.

The result data R is provided to a motion planner unit 35, which transforms the provided result data R in an actual planned motion of the ego-vehicle E that should be carried out by the ego-vehicle E. This actual planned motion is indicated by motion data M, which are the provided to the ego-vehicle E.

The ego-vehicle E comprises a motion control unit 50, configured for controlling the motion of the ego-vehicle E. Based on the provided motion data M, the motion control unit 50 determines a control signal for actuators 60 of the ego-vehicle E in order to carry out the determined motion, in particular a determined driving maneuver.

Thus, based on the trained convolutional neural network 10 and provided unseen traffic data D, a driving maneuver of the ego-vehicle is determined. Thus, also complex driving scenarios can be analysed, in particular in view of social behaviour.

Fig.7 schematically shows a training method for a convolutional neural network for predicting a driving maneuver of at least one traffic participant V0, V1 in a traffic scenario S of an ego-vehicle E, comprising the following steps. In a first step S1, traffic data for the convolutional neural network is determined, wherein the traffic data comprises a position of each of the traffic participants V0, V1, a lane assignment for each of the traffic participants V0, V1 and at least one additional traffic parameter, wherein the at least one additional traffic parameter relates to the traffic scenario S. In a second step S2, transformed traffic data is determined by transforming positional coordinates of the traffic data into Frenet space. In a third step S3, a trained convolutional neural network 10 is determined by training the convolutional neural network dependent on the determined transformed traffic data.

### Reference signs

- 10: trained convolutional neural network
- 11: convolutional social pooling unit
- 11a: social tensor layer
- 11b: first hidden layer
- 11c: second hidden layer
- 11d: third hidden layer
- 20: trained outlier detection model
- 30: control unit
- 31: environment model
- 32: ego-vehicle dynamics unit
- 33: pre-processing model
- 34: scenario assessment unit
- 35: motion planner
- 40: environment sensor
- 50: motion control unit
- 60: actuators
- B: social behaviour data
- C: maneuver class
- C_{E}: encoded maneuver class data
- D: unseen traffic data
- D_{E}: encoded traffic data
- D_{R}: raw unseen traffic data
- D_{T}: transformed unseen traffic data
- E: ego-vehicle
- M: motion data
- R: result data
- S: traffic scenario
- T: trajectory
- T_{E}: encoded trajectory data
- S_{C}: control signal
- T7: sixth trajectory
- T8: seventh trajectory
- T9: eighth trajectory
- T10: ninth trajectory
- T11: tenth trajectory
- T_{V}: control trajectory
- T_{S}: swarm trajectory
- V0: first vehicle (traffic participant)
- V1: second vehicle (traffic participant)
- V2: third vehicle (traffic participant)
- V3: fourth vehicle (traffic participant)
- V4: fifth vehicle (traffic participant)
- V5: sixth vehicle (traffic participant)
- V6: seventh vehicle (traffic participant)
- V7: eighth vehicle (traffic participant)
- V8: ninth vehicle (traffic participant)
- V9: tenth vehicle (traffic participant)
- V10: eleventh vehicle (traffic participant)
- V11: twelfth vehicle (traffic participant)
- V12: thirteenth vehicle (traffic participant)
- V113: fourteenth vehicle (traffic participant)

## Claims

1. Training method for a convolutional neural network for predicting a driving maneuver of at least one traffic participant (V0, V1) in a traffic scenario (S) of an ego-vehicle (E), comprising the steps:
determining (S1) traffic data for the convolutional neural network, wherein the traffic data comprises a position of each of the traffic participants (V0, V1), a lane assignment for each of the traffic participants (V0, V1) and at least one additional traffic parameter, wherein the at least one additional traffic parameter relates to the traffic scenario (S); wherein
determining (S2) transformed traffic data by transforming positional coordinates of the traffic data into Frenet space; and
determining (S3) a trained convolutional neural network (10) by training the convolutional neural network dependent on the determined transformed traffic data.

2. Method of claim 1, comprising the steps:
applying the trained convolutional neural network (10) on a plurality of traffic scenarios (S), thereby determining a distribution of social interactions; and
determining a trained outlier detection model (20) by training an outlier detection model dependent on the determined distribution.

3. Method of claim 2, wherein
determining the distribution comprises using a read-out function of a hidden layer (11b) of the convolution neural network.

4. Method of any of claims 1 to 3, wherein
the at least one additional traffic parameter comprises traffic participant data, road data and/or environmental data.

5. Method of any of the preceding claims, wherein
the traffic data is obtained from environment sensors of the moving ego-vehicle (E).

6. Method of any of the preceding claims, wherein
transforming positional coordinates into Frenet space comprises:
applying a road geometry model and/or a clothoid model onto the positional coordinates.

7. A trained convolutional neural network (10), determined by executing the training method of any of the claims 1 to 6, configured for executing the prediction method of any of the claims 10 to 13.

8. A trained outlier detection model (20), determined by executing the training method of any of the claims 2 to 6 configured for executing the prediction method of any of claims 11 to 13.

9. Trained outlier detection model of claim 8, comprising a one-class nu-Support Vector Machine.

10. Prediction method for a for driving maneuver of at least one traffic participant (V0, V1) in a traffic scenario (S) of an ego-vehicle (E), comprising the steps:
determining unseen traffic data (D) relating to the traffic scenario (S); and
predicting a maneuver class and a trajectory (T) for each traffic participant in the traffic scenario (S) dependent on the trained convolutional neural network (10) of claim 7 and the determined unseen traffic data (D), wherein the predicted trajectory relates to a predicted driving maneuver and wherein the predicted maneuver class relates to a type of diving maneuver.

11. Method of claim 10, comprising the steps:
determining unseen traffic data (D) relating to the traffic scenario (S); and
predicting an anomaly in the unseen traffic data (D) using the trained outlier detection model (20) of any of the claims 8 to 9.

12. Method of any of the claims 10 to 11, comprising the steps:
determining transformed unseen traffic data (D) by transforming unseen positional coordinates of the unseen traffic data (D) into unseen Frenet coordinates using road geometry features; and
predicting an anomaly in the unseen traffic data using the trained outlier detection model of any of the claims 8 and 9 and the determined transformed unseen traffic data.

13. Method of claim 12, wherein
predicting the anomaly comprises the steps:
determining anomaly output data by feeding the determined transformed unseen traffic data into the trained convolution neural network (10); and
classifying the determined anomaly output data dependent on the trained outlier detection model of any of the claims 8 and 9.

14. Control unit, configured for executing a training method of any of the claims 1 to 6 and/or a prediction method of any of the claims 10 to 13.

15. Control method of an at least partly autonomous vehicle, comprising the steps:
determining a trained convolutional neural network (10) of claim 7 and/or determining a trained outlier detection model (20) of any of the claims 8 and 9; and
controlling the at least partly autonomous vehicle dependent on the determined trained convolutional neural network (10) and/or dependent on the trained outlier detection model (20) .
